(19) Europäisches Patentamt

European Patent Office

Office européen des brevets

(11) **EP 1 729 173 A2**

(12) **EUROPEAN PATENT APPLICATION**

(43) Date of publication:
06.12.2006 Bulletin 2006/49

(51) Int Cl.:
***G03B 31/04*** (2006.01)

(21) Application number: 06010891.7

(22) Date of filing: 24.05.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.05.2005 DK 200500772**

(71) Applicant: **Telegraf ApS**
**1771 Copenhagen V (DK)**

(72) Inventors:
• **Dannow, Jesper Lindequist**
**1771 Copenhagen K (DK)**
• **Jordan, Frank**
**01097 Dresden (DE)**

(74) Representative: **Plougmann & Vingtoft A/S**
**Sundkrogsgade 9,**
**P.O. Box 831**
**2100 Copenhagen Ø (DK)**

(54) **System for generating synchronized add-on information**

(57)     A system and a method for synchronization of add-on information to e.g. a film projector in a cinema is proposed.

The system and method are based on producing a time code information using a correlation between a live audio signal from the film projector, e.g. the sound monitor signal, and a pre-stored copy of the soundtrack from the film. Both the synchronization and the playback of subtitles and/or audio clips can be controlled by software on a PC requiring only additional hardware such as a soundcard, a beamer to produce subtitles and a wireless headphone system to reproduce the audio dips.

With optimum choice of parameters such as block size of the input signal, and search window size of the soundtrack copy, the system can provide with a high immunity against interfering noise and pitch variation of the film projector, and a synchronization match within 100 ms is possible.

Fig. 1

## Description

### Field of the invention

The invention relates to the field of equipment for public presentations, more specifically it relates to the field of add-on information equipment such as for cinemas and equivalents. More specifically, the invention provides a system for generating synchronized add-on information and a method of generating a time code that can be used In such system.

### Background of the invention

Systems for playback of add-on information, such as audio clips or projecting subtitles, in a cinemas or movie theatres during playback of a film are known. Such add-on information may be playback of audio clips with translated versions of spoken language of the film presented via headphones to selected persons of the audience. For example such audio clips will allow children or visually impaired persons to understand the film in a foreign language even though they are not old enough to read the subtitles, or films without subtitles can be supplemented with soundtracks in different languages that can be selected individually by the audience that receives the selected soundtrack via headphones. The add-on information may be subtitles projected on the screen by an additional projection device, such as a translated version of spoken language of the film which may not be present on the original film presented via the film projector.

A problem with such add-on information systems is synchronization to the film projector. In order for the add-on information to be relevant, it should be tightly synchronized with the film, preferably "lip synchronously". Although modern digital cinema projectors offer precise timing information with a wide range of applications, there are only a few installations because of the high investment. Thus, in general film projectors in cinemas do not deliver a time code that will allow the add-on system to synchronize its add-on information to the film. Since it is well know that speed, or pitch, varies among film projectors, it is not possible to provide acceptable synchronization by merely playing a pre-recorded add-on information track along with the film. The pitch error of the film projector would in such case cause a large deviation. A pitch error of 1% pitch error results In a synchronization error of more than one minute in the end of a 2 hour long film - i.e. a totally unacceptable for synchronization of subtitles etc.

US patent US 5,055,939 describes a method and system for synchronizing an auxiliary sound source with a motion picture film soundtrack. Inherent characteristics, such as "syllabic structure" or "absolute value envelope", of the film soundtrack (or a copy thereof), are used for correlation to achieve "lip synchronous" synchronization of the auxiliary sound source to the film, since the main intention is to use the system to provide a number of audio channels available, each being assigned to a language different from the language of the main soundtrack. Thus, the system described is complicated and thus expensive and therefore not relevant for small cinemas, such as cinemas for children etc.

Thus, according to the above, it may be seen as an object of the present invention to provide an add-on information system capable of providing a precise synchronization to a film presented by a film projector without a time code output. The system must be adapted for low cost implementation and easy to operate.

According to a first aspect, the Invention provides an add-on information system adapted to playback pre-recorded add-on information synchronized with an audio input signal received from an associated film projector, the system comprising

- a synchronizer unit adapted to select a block of the audio Input signal and perform a correlation between the selected block of the audio input signal and a search window of a pre-stored image audio file, generate a correlation metric based on the correlation, and generate a time code information based on the correlation metric,

- a playback unit adapted to playback the pre-recorded add-on information based on the time code information provided by the synchronizer unit.

With the 'pre-stored image audio file' is understood a copy of the soundtrack that is to be presented by the associated film projector. It may be a high quality copy but a copy with a certain degree of limited sound quality will suffice. The copy may be stored on a disc such as a CD, a DVD or on a hard disc on a computer.

The function of the synchronizer unit is based on using the audio input signal as an indicator reflecting an actual location in the film. The audio input signal is preferably an audio output from the film projector, such as the audio output that is to the amplifier/loudspeaker system in the cinema. It may be either an analog or a digital audio signal. If preferred, an acoustic audio Input signal may be used as input to the system, such as sound picked up from an audio monitor in the projector room using a microphone.

Via a mathematical procedure involving a correlation between the two signals, the synchronizer unit can find a current location of the film by finding the location in the pre-stored audio image file that provides the best match with the block of the audio input signal. Thus, having found this location in the pre-stored audio image file, the time code information is also automatically known, and the time code information can be generated. The time code information is then made available to the playback unit that can playback its pre-recorded add-on Information, i.e. audio clips or sub-titles, synchronized with the actual location in the film. Each single part of the pre-recorded add-on information is preferably stored with an assigned time code that indicates the time relative to the film where the part should be played. Thus, with a time code information available, the playback unit can playback each single add-on information part when it is desired to, namely so as to ensure a synchronization with the film.

The correlation metric is used to indicate, within the search window of the audio image file, where the highest possible correlation between the block of the audio input signal and the audio image file exists. Preferably, the metric is calculated as a function of time within the search window. A peak in this correlation metric indicates the time, e.g. indicated as a block or a sample number or as a time in seconds or fraction of seconds, where the block of the audio input signal best matches the audio image file. Consequently the block of audio input signal has been temporally synchronized with the audio image file, and the time code information can be generated in accordance thereto. Using such metric indicative of the correlation, it is an easy task to generate an automatic procedure that finds the time within the search window where the value of the metric is highest.

The add-on information system is advantageous since it is based on a relatively simple method. It is possible to implement the system using existing and widespread low cost technical components so that is possible to implement the system at a low price, and thus it is well suited also for use in small cinemas or theatres. The system is robust against artefacts in the audio input signal such like noise, pitch variation, and even short stops of the audio input signal. The system will function with any film - there are no requirements to special film formats etc. As long as a copy of the film soundtrack is available, it is possible for the system to function.

With the system it is possible to obtain a very tight synchronization of the add-on information with the film. The system is also able to function with film projectors that has a speed, or pitch, that differs considerably from the correct pitch, such as 3% or more. In addition, the system is immune to noise, both steady random noise and scratches etc. that may be present on the received audio input signal.

In preferred embodiments of the system, the playback unit is adapted to playback pre-recorded audio signals. Alternatively or additionally, the playback unit may be adapted to playback pre-recorded visual information.

In preferred embodiments, the synchronizer unit is implemented on a Personal Computer (PC), i.e. using a computer software product executed on the PC. Embodiments based on a PC can be provided very economically. The audio Input signal is preferably received via an analog audio interface on the PC, e.g. a standard soundcard installed on the PC. Part of or the entire playback unit may also be implemented using the PC, such as audio clips stored on the PC hard disc and played back via a soundcard on the PC.

In preferred embodiments the synchronizer unit uses a block length within a range of such as: 0.5-20 ms, 1-15 ms, 2-10 ms, more preferably 3-8 ms, and most preferably 4-6 ms. A good compromise between performance and required computer calculating power is found to be achieved with a block length in the mentioned ranges.

Preferably, the synchronizer unit comprises a band pass input filter adapted to band pass filter the audio input signal prior to perform the correlation with the pre-stored audio image file, wherein a band pass frequency range is: 50-15000 Hz, 100-12000 Hz, 200-10000 Hz, more preferably 300-8000 Hz, and most preferably 400-4000 Hz. This filter provides a synchronization tracking and helps to eliminate influence of noise on the audio input signal.

The correlation preferably comprises performing a cross-correlation computation. The correlation is preferably performed with a length of the search window being within a range of: 1-500 seconds, 5-200 seconds, 10-120 seconds, preferably 15-90 seconds, and most preferably 20-80 seconds. A search window of this length, e.g. 60 seconds, will provide a good compromise between requirement of computation power and synchronization performance.

In preferred embodiments, the synchronizer unit is further is to generate the time code information based on an estimated pitch of the associated film projector, upon a level of the audio Input signal being less than a predefined threshold. Thus, in these embodiments, the system is capable of generating a time code information with a good synchronization even though the level of the input audio signal is low, such as in silent passages of the film. In such passages, the synchronizer unit then uses an estimate of the film projector pitch in order to be able to extrapolate a time code rather than using the audio input signal which is of no use in silent passages. Preferably, this estimated pitch of the associated film projector is estimated based on consecutively generated time code information. Thus, the synchronizer unit preferably estimates the film projector pitch on a regular basis in order to be able to provide this information when the audio input signal fails to provide a basis for generating the time code.

The synchronizer unit preferably comprises controlling means adapted to evaluate a parameter indicative of validity of the generated time code information, and it may further be adapted to suppress the generated time code information upon the parameter indicative of validity of the generated time code Information being less than a predefined threshold. Thus, with such a validity parameter, it is possible for the synchronizer to evaluate a calculated time code estimation and decide whether to update the generated time code using an estimate based on the audio input file or switch to using an extrapolation using a projector pitch estimate instead, or alternatively switch to a manual mode of operation, such as by providing an operator with an alarm, in case a fatal error is detected and it is impossible for the synchronizer unit to generate a proper time code information.

In a second aspect, the invention provides a method of generating a time code based on an audio Input signal received from an associated film projector, the method comprising the steps of:

1) selecting a block of the audio input signal,

2) performing a cross-correlation procedure between the selected block of the audio input signal and a search window of a pre-stored copy of a soundtrack of a film being reproduced by the associated film projector,

3) calculating a correlation metric as a function of time with in the search window, the correlation metric being indicative of a correlation between the block of the audio input signal and the audio image file, and

4) generating a time code in accordance with a time where the correlation metric has a maximum.

The same general advantages apply for the method of the second aspect as was mentioned in connection to the first aspect.

The method may further comprise the step of playing a pre-recorded add-on information part taking into account the generated time code, preferably the pre-recorded add-on information part is being played at time where the generated time code substantially corresponds to a preferred playback time assigned with the pre-recorded add-on information part.

A third aspect provides a computer executable program adapted to perform the method of the second aspect. Preferably, the computer executable program is adapted to be executed on a Personal Computer or a computer being equivalent thereof. A further aspect provides a computer readable storage medium comprising a computer executable program code according to the second aspect. The storage medium may be a hard disk, a floppy disk, a CO, a DVD, an SD card, a memory stick, a memory chip etc.

For further embodiments, reference is made to the above description of the first aspect and to the following detailed description.

It is to be understood that the mentioned aspects of the invention may each be combined with any of the other aspects. These and other aspects of the invention will be apparent from and elucidated with reference to the embodiments described hereinafter.

## Brief description of the drawings

In the following the invention is described in more details with reference to the accompanying figures, of which

Fig. 1 shows an embodiment of an add-on information system according to the invention,

Fig. 2 shows components of a preferred implementation of a synchronization unit on a Personal Computer, and

Fig. 3 shows a preferred add-on information system with a preferred implementation of a playback unit comprising an audio and a visual part.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

## Description of preferred embodiments

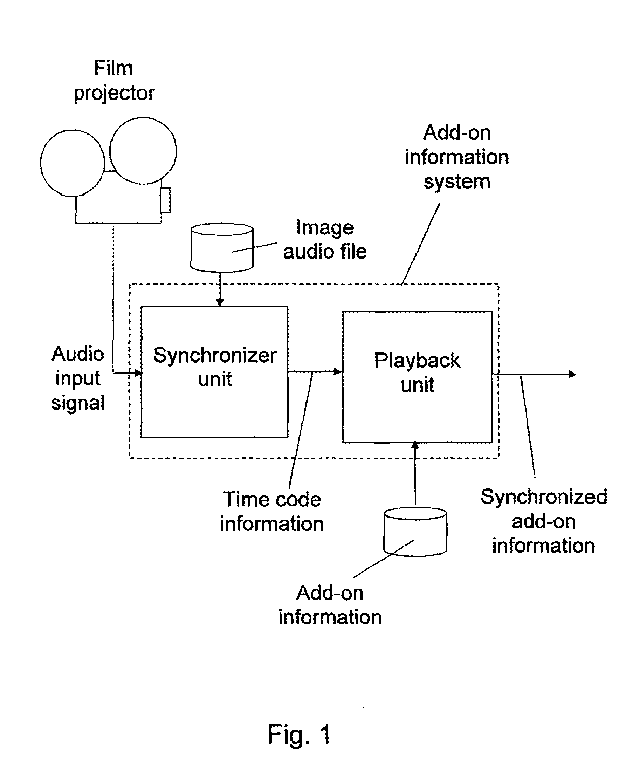

Fig. 1 shows a block diagram with an embodiment of the add-on information system according to the invention. The system receives an audio input signal, i.e. the soundtrack audio signal delivered by an associated film projector, e.g. based on the film projector analog audio output that is also used to reproduce the soundtrack In the cinema. The add-on information system uses the audio input signal to generate a time code information which is in accordance with an actual timing of the film being presented by the film projector.

A synchronization unit performs this synchronization based on a mathematical correlation process performed on a selected block of the audio input signal and an image audio file. The Image audio file is a copy of the soundtrack of the film being presented by the film projector, e.g. a copy stored on a disc such as a hard disc, a CD or a DVD. The synchronization unit provides the time code information and a playback unit can then playback pre-stored add-on information, e.g. audio clips or subtitles stored on a disc, in accordance therewith. Preferably, each part of the pre-stored add-on information has during recording been assigned with a time code so it is possible to play each part synchronized with the film when the time code information of the actual timing of the film is available. Thus, the playback unit is capable of producing synchronized add-on information, i.e. add-on information synchronized with the film.

With respect to stereo or surround sound soundtracks, it is to be understood that in principle only one audio Input signal is necessary, I.e. one audio channel is sufficient to perform the synchronization. I.e. one channel may be selected, or two or more channels may be combined to generate a "mono" audio input signal prior to further signal processing. It may also be chosen to use one channel only as input, e.g. only left channel.

No matter which Input signal is used, it is to be understood that for optimum synchronization performance, there should be accordance between the audio input signal from the film projector and the image audio file. Thus, if left channel is used of the Input signal only, then left signal should be used of the image audio signal as well.

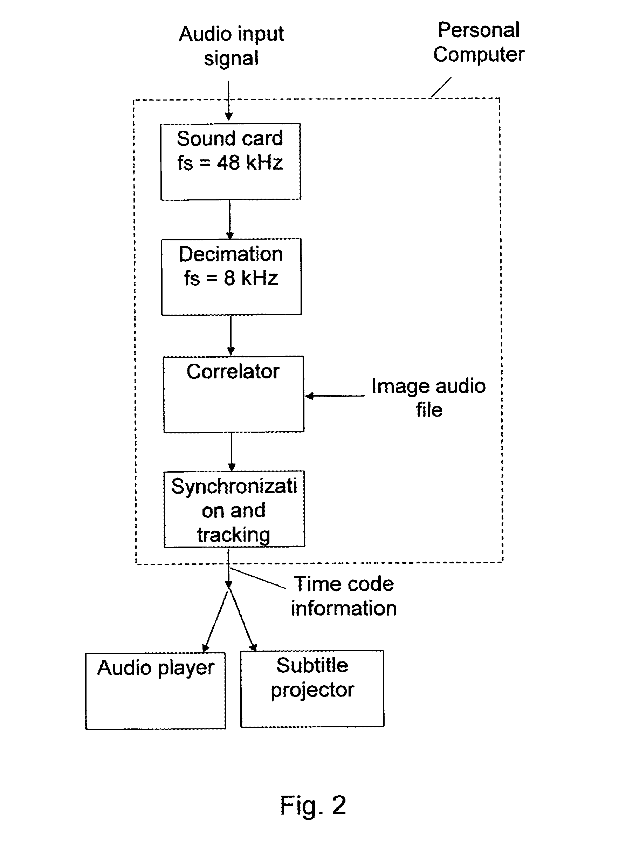

Fig. 2 shows a block diagram with a preferred embodiment where synchronizer unit is implemented on a Personal Computer (PC) - or an equivalent computer. The audio input signal is preferably an analog audio signal and it is received and analog-to-digitally converted by a sound card on the PC that is used as a data acquisition unit, preferably at a sample frequency of 48 kHz. Preferably, the input audio signal is band pass filtered using a IIR digital filter, preferably a 400-4000 Hz filter with a Butterworth characteristics. This filter helps providing a high immunity to noise while still utilizing the most important part of the audio input signal available for the synchronization process. Thereafter, the sample frequency of the digital signal is reduced by decimation. In a preferred embodiment, the decimation reduces the sample frequency to 8 kHz. This is done In order to save computer power for calculations, and a signal bandwidth of 4 kHz that can be achieved with an 8 kHz sample frequency is found acceptable with respect to synchronization performance and provides a significant saving of calculation power.

The band pass filtered and down sampled audio signal is correlated with the image audio file. The image audio filed is a down sampled version of the original soundtrack, preferably down sampled to e.g. 16 kbytes/s. Target is to reach a file that fits on a DVD or CD. Based on the correlation a synchronization and tracking is performed in order to generate the time code information. In the shown embodiment, this time code information is made available to a playback unit comprising an audio player and a subtitle projector, thus the system is capable of presenting auditive and visual add-on information synchronized with the film.

The core of the correlation shown in Fig. 2 is a cross correlation. If x(k) denotes the sequence of the band pass filtered and down sampled audio Input signal, and y(k) is the sequence from the image audio file, a correlation metric (or similarity metric) s(n) Is calculated as:

$$s(n) = \sum_{k=1}^{N} x(k)y(k+n)$$

where N is the search window length in samples, i.e. a search window of the audio image file that is scanned through. For further Information regarding cross-correlation, reference is made to . John G. Proakls, Dimitris G. Manolakis, "Digital Signal Processing", Prentice Hall, Mitra, Kaiser, "Handbook of Digital Signal Processing", and Athansios Papoulis, "Probabillity, Random Variables

and Stochastic Processes".

The correlation metric s(n) is a measure for the similarity. Synchronization timing is based on the maximum or peak value of this metric, since the maximum of the correlation metric being indicative of the timing where the (live) audio input signal and the image audio file provides the best possible match within the chosen search window. With consequent timing match results, the speed (pitch) difference is calculated. This allows a precise tracking of the Input timing.

For a precise synchronization to the live input from the film projector, the system computes an internal delay and a speed offset. This is necessary, since the synchronization process takes time there is a delay, so when the timing result is produced, it is based on an "old" audio input signal. However, this delay is easily compensated before generating the final time code information output.

Tests have shown that a preferred search window size of 25-60 seconds. A block length of the audio input signal of 4-6 ms is preferred, such as 256 sample, i.e. 5,3 ms with the chosen sample frequency. This block length provides a good noise immunity while still provides a satisfactory immunity to pitch error of the film projector. A longer audio input signal block will provide a better noise immunity but will perform worse with respect to immunity to pitch error. With optimum choice of parameters a total precision of the generated time code information is within 100 ms.

With a PC with a 2 GHz CPU tests have shown that a search window of 25 seconds can be performed in approximately one second. Thus, it is possible to update the time code information once a second which is sufficient even in case of a film projector with a pitch deviating significantly from the correct pitch, and an overall good noise immunity and synchronization capability can be obtained with this choice of search window and block length. Still with a 3% pitch error of the film projector, a signal to noise ratio of 50 dB is sufficient to provide a good synchronization performance with the mentioned choice of parameters. For better performance a more powerful computer is preferred, so as to be able to choose a larger search window, such as one minute or more.

The search window size, i.e. the length of the image audio file that is searched through for correlation with the audio input signal block, determines how flexible the system will react on e.g. starting point during start up relative to the film projector and interrupts etc. If the true position of the audio input signal block is outside the search window, the method can not possibly synchronize. Thus, a proper choice of search window length versus computer power is important in this respect. With a limited search window, also a strategy for choosing the search window position in the image audio file is also important. Preferably this position is based on prior synchronization results. At start up of course the first search window to be selected will most naturally be the start of the image audio file, however subsequent search windows are preferably picked at positions in the image audio file determined based on prior successful synchronizations.

In some embodiments, search window size is adaptively selected. E.g. it may be an advantage for high flexibility during start up to start with a long search window. After one or a few successful synchronizations the search window size may be reduced and thus reduce the required computer power to perform one synchronization, and thereby the synchronization speed can be increased, and the system can react quicker to sudden breaks etc. In case of synchronization failure, the search window size may be significantly increased in order to try to find the true position, and a position in the image audio file both before and after the expected position may be tried.

The synchronization and tracking unit shown in Fig. 2 performs the task of generating time code information by using the correlation metric calculated as mentioned above. To suppress erroneous time code information output, a special algorithm checks each timing estimation for plausibility or validity. If the validity Is estimated to be too low, it is possible for the synchronization and tracking unit to switch to another way of generating the time code information.

Preferably the correlation metric s(n) has a well-defined peak that indicates the clearly Identifies a "best match timing". If however, the signal-to-noise ratio for some reason is poor, the maximum value of the correlation metric s(n) may not be significant. Thus, a validity measure may be calculated as the correlation metric peak value normalized to the mean correlation metric value. This validity measure expresses validity of a synchronization result, and a pre-defined threshold for this value can be used to determine whether synchronization result should be used or discarded.

The system is unable to synchronize to silent parts of the audio Input signal, because the correlation metric in such instances will be (close to) zero. A silent period may also be detected merely by detecting an input level of the audio input signal block and thus based on a pre-defined threshold it is possible to determine if the current soundtrack is "silent" and thus a correlation calculation is meaningless. In these instances it is possible to base the time code information on the last time code information with an acceptable validity and then extrapolate from that time to the actual time code by using an estimate of the film projector pitch. The pitch of the film projector may be estimated based on a sequence of previously generated time code information data.

In preferred embodiments, the system will automatically synchronize once started by an operator. Preferably, the system runs a constant loop in which it selects a block of the audio input signal, performs a correlation with the image audio file within the search window and generates a time code In response thereto, and starts again with selecting a new block. Thus, once the program is started manually, i.e. together with the start of the film, an automatic generation of time code information can be generated with such system, i.e. the time code will be updated and thus synchronization is taken Into account In spite of pitch errors of the film projector. As mentioned, with a PC with having a 2 GHz CPU it is possible to generate one time code a second, i.e. it is possible to update the time code estimate once a second. This is sufficient to ensure a proper synchronization, also in case the film projector suddenly makes a short pause. This will quickly be compensated. With a more powerful computer, it is possible to increase calculation speed, and thus increase the amount of time code updates per time. The system may be implemented to exploit that the distribution of the soundtrack signal Is known (i.e. via the image audio file). Thus, pre-calculated marker points may show the system when to calculate reliable correlation and when not. The worst case scenario is a film that starts with a long silent sequence because then there is no synchronization possibility using the audio input signal. For such films, pre-calculated marker points may be used to help to start the synchronization process.

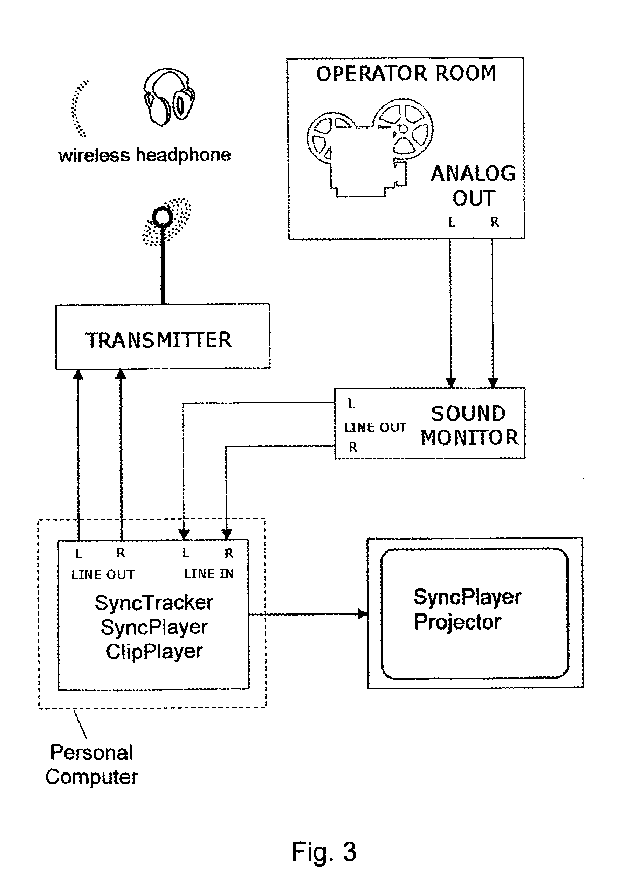

Fig. 3 shows physical parts of a preferred implementation of the system and method of generating time code information. The system includes three components. The synchronizer unit "SyncTracker" generates the time code information and is implemented as software on a Personal Computer (PC) preferably with a 2 GHz CPU or faster. The built-in soundcard of the PC is used to receive the audio input signal from the film projector, preferably via the sound monitor. Even though, preferably Fig. 3 shows the PC connected to both left L and right R channel sound monitor outputs, effectively only one channel is used by "SyncTracker". The "Sync-Tracker" may be implemented using WinAudioMLS.

The system is shown with a playback unit to produce add-on information with two parts - one for audio and video outputs. The "SyncPlayer" module (not shown) is implemented on the PC in software, and this module renders subtitles, which can be projected with a projector SyncPlayer Projector, such as a beamer and thus no interference with the film projector is required. The "ClipPlayer" (not shown) module implemented in software on the PC plays synchronized audio clips using the soundcard on the PC that produces analog audio output signal which is sent to a transmitter that transforms the signal to a wireless signal to the audience via wireless headphones. The produced audio clips can be mono or stereo signals. If "open" or "almost open" headphones are used, then the audience wearing them will still be able to hear the main soundtrack reproduced by the loudspeaker In the cinema, while the add-on information is just heard assisting the main soundtrack.

"SyncTracker" preferably uses the hard disc or a disc drive of the PC to store the image audio file, i.e. the compressed copy of the soundtrack. The time code information received from the "SyncTracker" module is used by the "ClipPlayer" for playing synchronized audio clips stored on the PC - either on a disc in its disc drive or on its hard disc. The sound clips may contain e.g. simple translations or explanations and are transmitted to the audience with wireless headphones. Such system is very attractive to countries were movies are not translated to the native local language, e.g. as common for Scandinavian countries. The "SyncPlayer" module uses the time code information from the "SyncTracker" to project synchronized subtitles with a beamer. These dynamic subtitles require no special and expensive copy of the film because they are projected with a digital beamer independently from the main film projector. Anti-aliasing is preferably used to reach optimum display quality. Both "SyncPlayer" and "ClipPlayer" contain a cue file, with timing information about the clip file to play or text to render.

The implementation shown in Fig. 3 is a pure software solution. The system requires no special signal processor (DSP) or additional hardware. Except for the output units, i.e. headphone system and projector, a conventional and low cost PC can be used.

Reference signs in the claims merely serve to increase readability. These reference signs should not in anyway be construed as limiting the scope of the claims, but are only included illustrating examples only.

**Claims**

1. An add-on information system adapted to playback pre-recorded add-on information synchronized with an audio input signal received from an associated film projector, the system comprising

   - a synchronizer unit adapted to select a block of the audio input signal and perform a correlation between the selected block of the audio input signal and a search window of a pre-stored image audio file, generate a correlation metric based on the correlation, and generate a time code information based on the correlation metric,
   - a playback unit adapted to playback the pre-recorded add-on information based on the time code information provided by the synchronizer unit.

2. System according to claim 1, wherein the playback unit is adapted to playback pre-recorded audio signals.

3. System according to claim 1 or 2, wherein the playback unit is adapted to playback pre-recorded visual information.

4. System according to any of the preceding claims, wherein the synchronizer unit is implemented on a Personal Computer.

5. System according to claim 4, wherein the audio Input signal is received via an analog audio Interface on the Personal Computer.

6. System according to any of the preceding claims, wherein the synchronizer unit uses a block length within a range selected from the group consisting of: 0.5-20 ms, 1-15 ms, 2-10 ms, 3-8 ms, and 4-6 ms.

7. System according to any of the preceding claims, wherein the synchronizer unit comprises a band pass input filter adapted to band pass filter the audio input signal prior to perform the correlation with the pre-stored audio image file, wherein a band pass frequency range is selected between the group consisting of: 50-15000 Hz, 100-12000 Hz, 200-10000 Hz, 300-8000 Hz, and 400-4000 Hz.

8. System according to any of the preceding claims, wherein the correlation comprises a cross-correlation.

9. System according to any of the preceding claims, wherein the correlation is performed with a length of the search window being within a range selected between the group consisting of: 1-500 seconds, 5-200 seconds, 10-120 seconds, 15-90 seconds, and 20-80 seconds.

10. System according to any of the preceding claims, wherein the synchronizer unit Is further adapted to generate the time code information based on an estimated pitch of the associated film projector, upon a level of the audio input signal being less than a predefined threshold.

11. System according to claim 10, wherein the estimated pitch of the associated film projector is estimated based on consecutively generated time code information.

12. System according to any of the preceding claims, wherein the synchronizer unit comprises controlling means adapted to evaluate a parameter indicative of validity of the generated time code information.

13. System according to claim 12, wherein the synchronizer unit is adapted to suppress the generated time code information upon the parameter indicative of validity of the generated time code information being less than a predefined threshold.

14. System according to any of the preceding claims, wherein the synchronizer unit is adapted to automatically detect a start of the film.

15. A method of generating a time code based on an audio input signal received from an associated film projector, the method comprising the steps of:

1) selecting a block of the audio input signal,
2) performing a cross-correlation procedure between the selected block of the audio input signal and a search window of a pre-stored copy of a soundtrack of a film being reproduced by the associated film projector,
3) calculating a correlation metric as a function of time with in the search window, the correlation metric being Indicative of a correlation between the block of the audio input signal and the audio image file, and
4) generating a time code in accordance with a time where the correlation metric has a maximum.

Fig. 1

Audio input
signal

Personal
Computer

Sound card
fs = 48 kHz

Decimation
fs = 8 kHz

Correlator

Image audio
file

Synchronizati
on and
tracking

Time code
information

Audio player

Subtitle
projector

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5055939 A